# EUROPÄISCHE PATENTANMELDUNG

(11) **EP 2 017 585 A1**
(43) Veröffentlichungstag der Anmeldung: **21.01.2009**
(21) Anmeldenummer: 08160576.8
(22) Anmeldetag: 17.07.2008
(51) Int. Cl.: G01F 1/05

(54) **Strömungserfassungsgerät**

(30) Priorität: 19.07.2007 DE 102007033792
(71) Anmelder: Gealan Formteile GmbH, 95145 Oberkotzau (DE)
(72) Erfinder: Braun, Thomas, 95234 Sparneck (DE); Saunus, Christian, 08223 Grünbach (DE)
(74) Vertreter: Fleuchaus, Michael A.

(57) **Zusammenfassung**

Die vorliegende Erfindung betrifft ein Strömungserfassungsgerät (1, 21) zur Bestimmung vom Strömungssignalen mit einem Trägerelement (2, 22), einer Funktionsbaugruppe (3, 15) mit wenigstens einem um eine Rotationsachse (6, 26) drehbeweglich angeordneten Erfassungselement (5) und wenigstens einem Sicherungselement (14, 27). Die Erfindung ist **dadurch gekennzeichnet, dass** das Trägerelement (2, 22) in einer Montageöffnung eines medienführenden Leitungssystems integrierbar und mit dem Erfassungselement (5) drehbeweglich gekoppelt ist und das Sicherungselement (14, 27) die Rotationsachse (6, 26) des Erfassungselements (5) beweglich fixiert. Die Erfindung umfasst ferner das Verfahren zur Herstellung der Strömungserfassungsgeräte als auch deren Verwendung.

## Beschreibung

Die vorliegende Erfindung betrifft ein Strömungserfassungsgerät zur Bestimmung von Strömungssignalen, die Verwendung solcher Strömungserfassungsgeräte in einem Leitungssystem und Verfahren zur Herstellung der Geräte.

Geräte zur Erfassung von Strömungssignalen sind im Stand der Technik bekannt. So werden beispielsweise in bekannten medienführenden Anlagen zur Erfassung von Strömungssignalen, wie beispielsweise Durchflussmengen, Strömungserfassungsgeräte verwendet, welche als Funktions- oder Modulgruppen, wie sie in medienführenden Anlagen eingesetzt werden, gewisse Nachteile aufweisen. So sind die mediengeführten Anlagen und oder Systeme streng auf die standardisierten Bauräume und definierten Umgebungsbedingungen beschränkt und bietet nicht in allen Fällen die Möglichkeit des Zugangs und der freien Austauschbarkeit. Darüber hinaus führt die eingeschränkte Servicefreundlichkeit selbst in bestimmten Anwendungen zum Komplettaustausch der Funktionsbaugruppen und die Servicetechniker haben im Anwendungsbereich / Servicefall nicht die Möglichkeit Systeme sinnvoll zu reinigen. Das bedeutet unter Umständen den Kompletttausch der Funktionsbaugruppen, obwohl ggf. lediglich ein untergeordnetes Bauteil tatsächlich defekt ist..

Solche Systeme sind beispielsweise Durchflussmesser, welche als Baugruppen eingesetzt werden.

Aufgabe der vorliegenden Erfindung ist es, die im Stand der Technik bekannten Nachteile wenigstens teilweise zu vermeiden bzw. ein verbessertes System zur Verfügung zu stellen.

Erfindungsgemäß weist das Strömungserfassungsgerät zur Bestimmung von Strömungssignalen wenigstens ein Trägerelement, eine Funktionsbaugruppe mit wenigstens einem, um eine Rotationsachse drehbeweglich angeordneten Erfassungselement und ein Sicherungselement auf. Dabei wird das Strömungserfassungsgerät dadurch gekennzeichnet, dass das Trägerelement in einer Montageöffnung eines medienführenden Leitungssystems integrierbar ist und mit dem Erfassungselement vorzugsweise drehbeweglich gekoppelt wird. Darüber hinaus ist die Rotationsachse des Erfassungselements beweglich, insbesondere drehbeweglich mit einem Sicherungselement fixiert.

Gemäß einer besonders bevorzugten Ausführungsform ist das Trägerelement als Verschlusselement ausgeführt, bzw. gemäß eines weiteren besonders bevorzugten Ausführungsbeispiels als zwei zueinander schwenkbeweglich angeordnete Halbschalen, zwischen welchen die Funktionsbaugruppe aufgenommen wird. Entsprechend dieser Ausführungsform kann auch das Sicherungselement dazu verwendet werden, dass es durch die Fixierung der Rotationsachse des Erfassungselementes auch die Position der beiden Halbschalen des Trägerelementes in einer geschlossenen Position bestimmt bzw. fixiert.

Gemäß einer weiteren besonders bevorzugten Ausführungsform ist das Trägerelement an die benachbarten Strukturen insbesondere in der Montageöffnung des medienführenden Systems angepasst. Dies bedeutet unter anderem, dass einerseits die medienführenden Leitungssysteme das Trägerelement aufnehmen können bzw. gemäß einer alternativen Ausführungsform insbesondere die Montageöffnung selbst derart gestaltet ist, dass Elemente, wie sie für die Funktion eines Verschlusses verwendet werden, in die benachbarten Strukturen des medienführenden Systems bzw. des hieran angrenzenden Gehäuses, in welchem das medienführende System aufgenommen ist, eingreifen und somit beispielsweise eine abdichtende Funktion des Trägerelementes für die medienführenden Leitungssysteme bereit gestellt wird.

So kann beispielsweise das Trägerelement oder gemäß einer weiteren alternativen Ausführungsform die Funktionsgruppe Verbindungselemente aufweisen, welche aus einer Gruppe ausgewählt werden, welche Bajonett-, Klammer-, Schraubverbindungen, Kombinationen hieraus und dergleichen aufweist. Darüber hinaus kann das Trägerelement selbst einen Deckel bilden, welcher für die Abstützung und Lagerung der Rotationsachse und/oder einer Propellerbaugruppe dient, wie sie gemäß einer weiteren besonderen Ausführungsform für die Funktionsgruppe bzw. das Erfassungselement für eine Funktionsgruppe verwendet wird. Dabei weist gemäß einer weiteren besonderen Ausführungsform das Verschlusselement eine integrierte und/oder angespritzte Dichtung auf, die insbesondere bei der Anordnung in einer Montageöffnung das hieran anschließende medienführende Leitungssystem vollständig abdichtet.

Gemäß einer weiteren, besonders bevorzugten Ausführungsform umfasst das Trägerelement selbst das Verschlusselement und kann vorzugsweise als integrale Baugruppe zusammen mit der Funktionsbaugruppe und dem Sicherungselement als einteiliges Bauteil ausgeführt werden.

Gemäß einer weiteren, besonders bevorzugten Ausführungsform umfasst das Trägerelement neben den abdichtenden und/oder verschließenden Elementen weitere strukturelle Bauelemente, wie beispielsweise einen Griffbereich, über welchen bei der Handhabung des Strömungserfassungsgerätes der Bediener sowohl die Montage, als auch die Demontage des entsprechenden Gerätes bewerkstelligen kann. Dies kann beispielsweise ein im Wesentlichen parallel zu der Rotationsachse angeordneter Griffbereich sein, über welchen ein Bojonett- bzw. Schraubverschluss bedient und nach Öffnung des Verschlusselementes das Strömungserfassungsgerät aus der Montageöffnung entnommen werden kann. Dabei ist es besonders von Vorteil, dass gemäß einer Ausführungsform das Strömungserfassungsgerät einstückig ausgebildet ist und damit eine verliersichere Gesamtanordnung insbesondere für den teilweise robusten Einsatz bei der Montage auf Baustellen bietet.

Gemäß einer weiteren, besonders bevorzugten Ausführungsform umfasst die Funktionsgruppe ein Erfassungselement wie beispielsweise einen Propeller und einen Magneten zur Signalübertragung. Dabei bilden vorzugsweise der Propeller und der Magnet eine rotationsfähige Gruppe im Bezug auf das Verschluss- bzw. Trägerelement, wobei die Rotationsgeschwindigkeit bzw. die Drehzahl des Propellers und des damit gekoppelten Magneten mittels einem entsprechenden Sensor abgenommen bzw. erfasst werden kann. Solche Techniken sind im Stand der Technik bekannt und es wird nur der Vollständigkeit halber auf die Funktionalität für die Datenübertragen gewiesen.

Gemäß einer weiteren, besonders bevorzugten Ausführungsform erfolgt die Montage des Strömungserfassungsgerätes innerhalb der Montageöffnung, vorzugsweise im Wesentlichen parallel zu der Rotationsachse des Funktionselementes.

Gemäß einer weiteren, besonders bevorzugten Ausführungsform der vorliegenden Erfindung sind, wie bereits ausgeführt, das Trägerelement, die Funktionsbaugruppe und das Sicherungselement als einstückiges Bauteil ausgeführt. Gemäß einer weiteren besonders bevorzugten Ausführungsform ist das Sicherungselement wenigstens längsverschieblich im Trägerelement angeordnet bzw. integriert. Solch eine Ausführungsform kommt insbesondere im Bezug auf die Ausführung des Trägerelementes als zwei schwenkbeweglich zueinander angeordnete Halbschalen zum Tragen, um damit insbesondere die geschlossene Position der Halbschalen zueinander, vorzugsweise in Kombination mit dem Sicherungselement des Erfassungselementes bereitzustellen.

Wird das erfindungsgemäße Strömungserfassungsgerät insbesondere vollständig in ein medienführendes Leistungssystem aufgenommen, soll insbesondere zur Abdichtung der Montageöffnung ein weiteres Bauelement verwendet werden. Darüber hinaus wird bei einer solchen Anordnung des Strömungserfassungsgerätes insbesondere des Trägerelementes innerhalb der medienführenden Leitungssysteme dessen Struktur angepasst, was beispielsweise dadurch erfolgen kann, dass wenigstens der Außendurchmesser des Strömungserfassungsgerätes so gewählt ist, dass im Wesentlichen ein vollständiges Durchströmen des Mediums durch das Erfassungsgerät bewirkt wird, um eine Information bezüglich der zu messenden Durchflussmengen oder Durchflussgeschwindigkeit zu erhalten. Dabei ergibt sich eine solche Anordnung als im Wesentlichen druckneutrale Anordnung, um insbesondere eine Beeinflussung der zu messenden Mediengeschwindigkeit bzw. Durchflussmenge zu reduzieren.

Gemäß einer weiteren, besonders bevorzugten Ausführungsform dient die Funktionsgruppe beispielsweise in der Ausführungsform einer Propellerbaugruppe oder dergleichen insbesondere zur Bestimmung einer Strömungsgeschwindigkeit, eines Strömungsvolumens oder der Viskosität des entsprechenden Mediums.

Gemäß einer weiteren, besonders bevorzugten Ausführungsform wird das Strömungserfassungsgerät vorzugsweise werkzeugfrei in die Montageöffnung des medienführenden Systems eingebaut, wobei insbesondere im Bezug auf die Ausführungsform des Trägerelementes mit zwei zueinander beweglich angeordneten Halbschalen zur Abdichtung des medienführenden Systems beispielsweise ein zusätzlicher Deckel mit entsprechenden Dichtungen verwendet werden kann.

Gemäß einer besonders bevorzugten Ausführungsform der vorliegenden Erfindung sind wenigstens einzelne Bauteile des Strömungserfassungsgerätes oder aber auch alle Bauteile, insbesondere die Funktionsgruppen aus wenigsten einem Werkstoff hergestellt, welcher aus einer Gruppe ausgewählt ist, die Kunststoffe wie beispielsweise duro- und/oder thermoplastischer Kunststoffe, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere, Fluorkunststoffe, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen und Metalle, insbesondere Stähle, wie nicht rostende Stähle aufweist, und/oder das Verschlusselement ist aus Kunststoff und/oder die Achsen sind aus Stahl bzw. Kunststoff und/oder der aus Kunststoff hergestellte Propeller ist mit einem Magneten ausgeführt.

Gemäß einer weiteren besonders bevorzugten Ausführungsform sind wenigstens einzelne Bauteile, vorzugweise das gesamte Strömungserfassungsgerät im Spritzgussverfahren, vorzugsweise im mehrstufigen Spritzgussverfahren wie beispielsweise dem Zweikomponentenspritzgussverfahren und insbesondere im Mehrkomponentenspritzgussverfahren hergestellt.

Die vorliegende Erfindung umfasst ferner auch die Verwendung eines der vorgenannten Strömungserfassungsgeräte für ein geschlossenes oder offenes Leitungssystem.

Neben Strömungserfassungsgeräten und deren Verwendung umfasst die vorliegende Erfindung auch ein Verfahren zur Herstellung des erfindungsgemäßen Strömungserfassungsgerätes, welches gemäß der vorliegenden Erfindung die Herstellung eines Trägerelementes mit wenigstens zwei schwenkbeweglich verbundenen Gehäuseabschnitten und der Funktionsgruppe als einstückiges Bauteil, das Zusammenschwenken dieser Gehäuseabschnitte und das Einschieben des Sicherungselementes zur Aufnahme wenigstens eines Abschnittes der Rotationsachse umfasst. Darüber hinaus umfasst das Verfahren auch die Herstellung des Trägerelements und/oder der Funktionsgruppen oder des Sicherungselementes im Spritzgussverfahren.

Gemäß einer weiteren besonderen bevorzugten Ausführungsform des erfindungsgemäßen Verfahrens, wird die Herstellung der einzelnen oder gesamten Bauteile des Strömungserfassungsgerätes in einem mehrstufigen Spritzgussverfahren insbesondere im Mehrkomponentenspritzgussverfahren vorgenommen.

Gemäß der vorliegenden Erfindung wird ferner unter einer Funktionsbaugruppe ein Abschnitt des Strömungserfassungsgeräts verstanden, der insbesondere drehbeweglich mit dem Trägerelement verbunden ist und bei welchem vorzugsweise dessen Rotationsachse einerseits mit dem Trägerelement mittelbar oder unmittelbar verbunden und andererseits in einem Sicherungselement aufgenommen wird. Dabei erfolgt die Aufnahme der Rotationsachse der Funktionsbaugruppe auch im Sicherungselement derart, dass eine Drehbewegung um die Rotationsachse der Funktionsbaugruppe oder Teilen hiervon möglich ist. Selbstverständlich liegt es auch im Sinne der vorliegenden Erfindung, dass alternative Funktionsbaugruppen und Ausführungsformen insbesondere in Bezug auf den zu verwendenden Propeller eingesetzt werden können. Dies umfasst sowohl die Anordnung der Propellerschaufeln im Bezug auf die Rotationsachse als auch deren Ausgestaltungsform. Dies hat insbesondere Bedeutung für die zu messende Größe oder Größen, da insbesondere in Bezug auf Durchflussgeschwindigkeit oder Durchflussmenge zu unterscheiden ist. Auch bei der Bestimmung der Viskosität sind hier zu unterschiedliche Ausführungsformen der zu verwendenden Funktionsbaugruppe Gegenstand der vorliegenden Erfindung.

Als Sicherungselement wird gemäß der vorliegenden Erfindung vorzugsweise ein Lager oder eine Hülse verstanden, in welchem beispielsweise die Rotationsachse des Erfassungselementes bzw. der Funktionsbaugruppe eingreift. Diese kann im Sinne eines Lagers ausgestaltet sein, wobei es auch im Sinne der vorliegenden Erfindung ist, dass vorzugsweise eine punktuelle Abstützung der Rotationsachse bereit gestellt wird. Darüber hinaus kann das Sicherungselement auch ein Rastelement umfassen, in welches ein entsprechend ausgeführtes Ende der Rotationsachse eingreift und einrastet. Dies hat insbesondere den Vorteil, dass es für den Bediener deutlich wird, wann das entsprechende Strömungserfassungsgerät die richtige Position im Bezug auf die Einbauöffnung einnimmt.

Gemäß einer weiteren besonders bevorzugten Ausführungsform werden die entsprechend ausgeführten Strömungserfassungsgeräte als sogenannte druckneutrale Geräte innerhalb eines Leitungssystems angeordnet und weisen als weiteres, möglicherweise nichtintegriertes Bauteil, einen Deckel oder ein Verschlusselement auf, mit welchen das entsprechende Leitungssystem abgedichtet wird oder diese Systemelemente sind miteinander kombiniert und werden als Gesamtbauteil in einem entsprechend medienführenden System integriert.

Dabei bietet die vorliegende Erfindung die Möglichkeit serviceorientiert Funktionselemente auszutauschen. Im speziellen bezieht sich die Montage- und Servicefreundlichkeit auf ein Strömungserfassungsgerät, welches im dargestellten Fall als systemschließende bzw. systemoffene Funktionsbaugruppe eingesetzt wird.

Das systemschließende Strömungserfassungsgerät wird vorzugsweise in einem medienführenden Leitungssystem so integriert, dass es die dafür vorgesehene Montageöffnung im Wesentlichen vollständig abdichtet und man insbesondere das Strömungserfassungsgerät servicefreundlich warten und reinigen kann. Das bedeutet insbesondere, dass die Funktionsbaugruppe vorzugsweise frontal im Gesamtgerät angebracht und ohne Werkzeugaufwand demontiert werden kann und beispielsweise als Verbindungselemente Bajonett-, Klammer- oder Schraubverbindungen zum Einsatz kommen.

Das systemoffene Strömungserfassungsgerät ist vorzugsweise in einem medienführenden Leitungssystem so integriert, dass es druckneutral im Inneren des Leitungssystem eingeschoben werden kann, so dass die zur Montage benötigte Öffnung durch ein weiteres Bauelement abgedeckt wird und man das Strömungserfassungsgerät servicefreundlich warten und reinigen kann.

Besonders bevorzugte Merkmale der Erfindung sind beispielsweise, dass das systemoffene Strömungserfassungsgerät und das systemschließende Strömungserfassungsgerät die vorhandenen Gehäusestrukturen als Träger oder Funktionsbereiche wenigstens teilweise nutzen.

Das systemoffene Strömungserfassungsgerät und das systemschließende Strömungserfassungsgerät sind vorzugsweise beide servicefreundlich montier- und demontierbar und funktions- und bewegungsentkoppelt und im Gesamtsystem eingebettet.

Unter anderem bieten die im folgenden beschriebene Erfindung die Möglichkeit, in medienführende Anlagen und/oder Systemen Strömungserfassungsgeräte anwendungsspezifisch so zu platzieren, dass für den Servicefall kompakte verlier - und funktionssichere Einheiten entstehen und diese insbesondere frontal im Gesamtsystem angeordnet bzw. in diesem Bereich ausgetauscht werden können. Die Funktionsbaugruppe bildet ferner vorzugsweise ein wartungsfreundliches und werkzeugfrei lösbares Strömungserfassungssystem, welches insbesondere flexibel ausgetauscht werden kann. Bevorzugte Anwendung finden diese Systeme z. B. in Durchlauferhitzern, Wärmetauschern, Gasthermen oder dergleichen.

Nachfolgend wird das Verfahren zur Herstellung eines Strömungserfassungsgeräts als systemschließendes Element beispielhaft beschrieben.

Das Strömungserfassungsgerät bildet hierbei ein System, welches aus einem Verschlusselement, einer Propellerbaugruppe, einer Drehachse und einem Sicherungselement besteht.

Der Deckel kann als Trägerelement für die Achse und die Propellerbaugruppe dienen und wird gleichzeitig als Verschlusselement möglicherweise mit integrierter angespritzter Dichtung genutzt. Das Strömungserfassungsgerät als systemschließendes Element ist eine abgeschlossene Funktionsbaugruppe, die in ihren Einzelteilen in verschiedenen Werkstoffkombinationen aufgebaut sein kann. Mögliche Kombinationen sind z. B. Kunststoffverschlusselement, eine Stahlachse, Kunststoffpropeller mit Magnet oder die Kombination mit einer Kunststoffachse.

Nachfolgend wird ferner auch das Verfahren zur Herstellung eines Strömungserfassungsgeräts als systemoffenes Element beschrieben.

Dieses System besteht insbesondere aus einem Trägerelement in Kartuschenform mit integrierter Kunststoffachse, einer Propellerbaugruppe und einem Sicherungselement.

Vorzugsweise wird das Trägerelement gleichzeitig mit der Achse einteilig hergestellt. Die Montage der Propellerbaugruppe erfolgt in einem separaten Montageprozess, welcher durch das Zusammenknicken des Trägerelementes und das Einschieben des beispielsweise angespritzten Sicherungselementes abgeschlossen wird.

Die Erfindung wird nachfolgend anhand zweier Ausführungsbeispiele beschrieben, welche jedoch den Schutzbereich der vorliegenden Erfindung nicht beschränken sondern nur beispielhaft erörtern.

Dabei zeigen
Fig. 1 und 2 perspektivische Ansichten einer ersten Ausführungsform der vorliegenden Erfindung;
Fig. 3 und 4 zwei unterschiedliche Ausführungsformen eines Propellers für das Strömungserfassungsgerät gemäß Figur 1 und 2;
Fig. 5 bis 7 perspektivische Ansichten einer zweiten Ausführungsform in unterschiedlichen Phasen des Zusammenbaus;
Fig. 8 eine geschnittene Seitenansicht der Ausführungsform gemäß Figur 7;
Fig. 9 eine Anordnung einer Ausführungsform gemäß Figur 1 in einem medienführenden Leitungssystem;
Fig. 10 eine Schnittdarstellung des Strömungserfassungsgeräts aus Figur 10 entlang der Schnittlinie A-A.

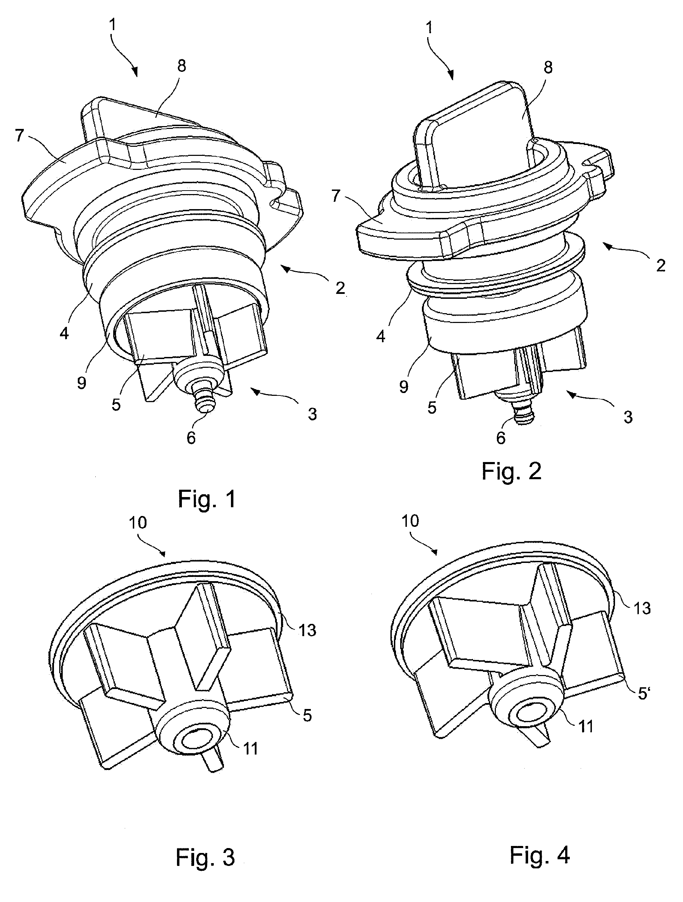

Figur 1 und Figur 2 zeigen zwei perspektivische Ansichten eines ersten Ausführungsbeispiels des erfindungsgemäßen Strömungserfassungsgerätes 1 als sogenanntes systemschließendes Element, bei welchem auf der Oberseite des Trägerelements 2 das Griffstück 8, das Verschlusselement 7 und die Dichtung 4 als Bestandteile des Trägerelementes 2 zu erkennen sind. Die Funktionsbaugruppe 3 umfasst unter anderem die Rotationsachse 6, die Propellerbaugruppe 5 und eine Führungshülse 9. Dabei ist das Verschlusselement als integrierter Verschlussdeckel ausgeführt, in welchem das Funktionselement in Form der Propellerbaugruppe mit dem Magneten angeordnet ist. Die Rotationsachse weist am unteren Ende eine umlaufende Nut auf, die insbesondere als Rastelement in Zusammenwirkung mit dem nicht dargestellten Sicherungselement dient.

In den Figuren 3 und 4 sind zwei unterschiedliche Ausführungsformen der Propellerbaugruppe dargestellt, wobei in Figur 3 die Propellerblätter im Wesentlichen senkrecht zur Rotationsachse angeordnet sind und in Figur 4 mit einem vorgegebenen Winkel gekippt zur Rotationsachse angeordnet sind. Mit den Bezugszeichen 13 ist die Magnetplatte dargestellt, die u. a. auch zur Stabilisierung der Propellerblätter 12 dient. In den Figuren 3 und 4 ist die Rotationsachse selbst nicht dargestellt, sondern lediglich die Hülse 11, die zur Aufnahme der Rotationsachse dient. An dieser Hülse 11 sind die Rotationsblätter 12 angeordnet, wobei vorzugsweise die entsprechende Propellerbaugruppe als einstückiges Spritzgussteil ausgeführt ist.

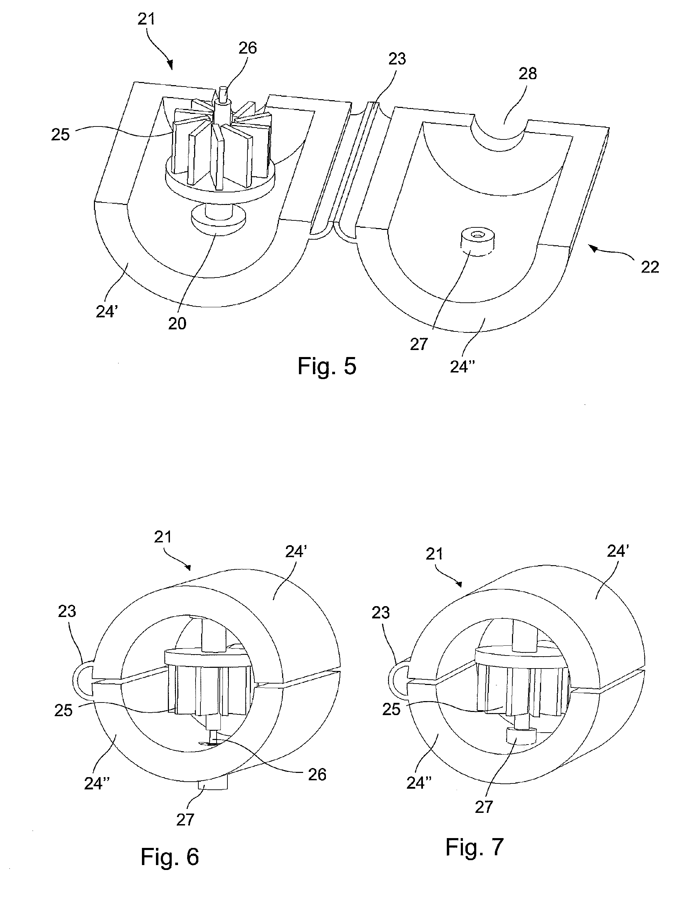

In den Figuren 5 bis 8 ist eine weitere alternative Ausführungsform des erfindungsgemäßen Strömungserfassungsgerätes 21 dargestellt, bei welchem das Strömungserfassungsgerät als offenes Element verstanden wird, wobei dieses die beiden Halbschalen 24' und 24" des Trägerelementes umfasst, die über eine Scharnierverbindung 23 schwenkbeweglich zueinander verbunden sind. Innerhalb des durch die beiden Halbschalen gebildeten Innenraums wird die Propellerbaugruppe 25 mit der Rotationsachse 26 aufgenommen und ist im geschlossenen Zustand im Lager 27 bzw. im Sicherungselement abgestützt. Mit dem Bezugszeichen 28 ist eine Durchströmöffnung für den geschlossenen Zustand des Strömungserfassungsgerätes 21 abgebildet. Figur 6 zeigt das Strömungserfassungsgerät 21 gemäß Figur 5 im geschlossenen Zustand, wobei das Sicherungselement 27 noch nicht in die Rotationsachse 26 eingreift. Erst in Figur 7 ist das Sicherungselement eingeschoben und nimmt den Endabschnitt der Rotationsachse 26 auf, wodurch insbesondere die beiden Halbschalen des Trägerelementes 24', 24" zueinander fixiert werden.

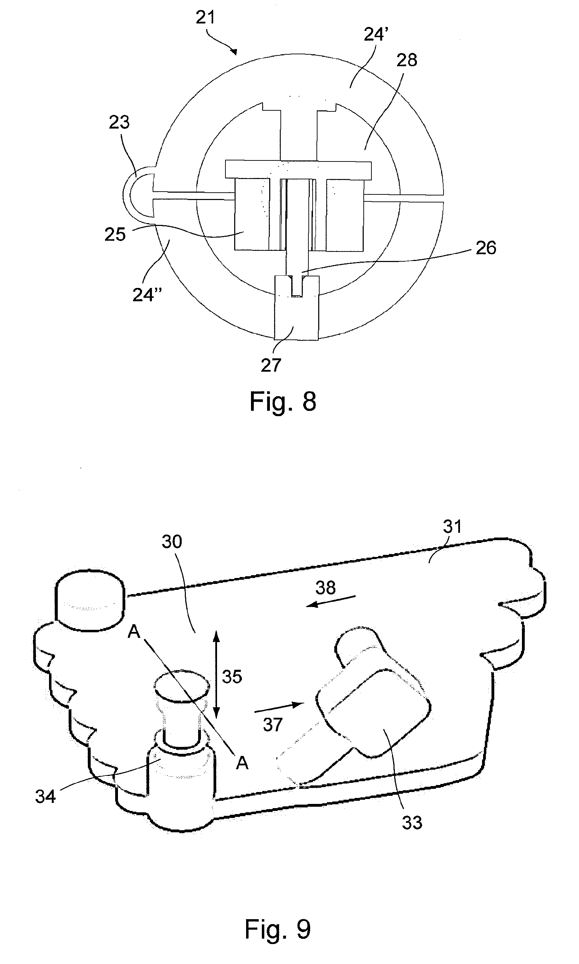

Figur 8 ist eine geschnittene Seitenansicht des Ausführungsbeispiels gemäß Figur 5 bis 7 für ein Strömungserfassungsgerät 21 als systemschließendes Element, bei welchem neben der Propellerbaugruppe 25 Teile des medienführenden Leitungssystems 28, welches sich durch das Strömungserfassungsgerät hindurch erstreckt, zu erkennen sind. Ferner sind das Sicherungselement 27 und die Rotationsachse 26 dargestellt und die beiden Halbschalen 24' und 24", als auch der Scharnierbereich 23 zu erkennen.

Figur 9 zeigt das Funktionsprinzip im montierten Zustand für ein weiteres alternatives Ausführungsbeispiel eines medienführenden Leitungssystems, bei welchem das medienführende Leitungssystem 30 ein Strömungserfassungsgerät als systemschließendes Element 34 aufweist, das von dem Medium durchströmt wird. Die Montagerichtung bzw. Demontagerichtung ergibt sich aus dem Doppelpfeil 35, wobei sich die Strömungsrichtung des Mediums durch die Pfeile 37 und 38 ergibt. Mit dem Bauteil 33 ist ein weiteres Funktionselement zur Bestimmung weiterer Kenngrößen des medienführenden Leitungssystems dargestellt.

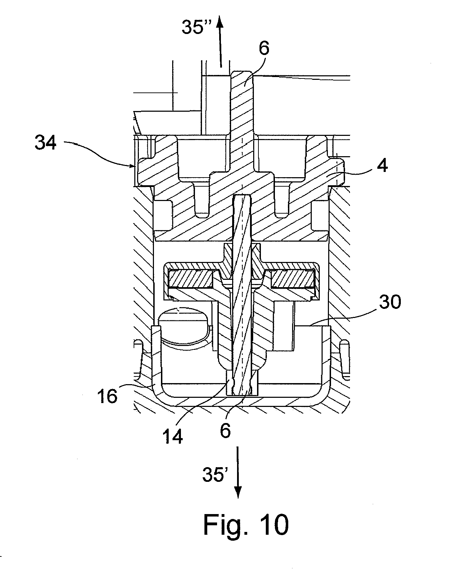

Figur 10 ist eine Schnittdarstellung durch das Strömungserfassungsgerät gemäß Figur 9 entlang der Schnittlinie A-A, welcher die Anordnung des Strömungserfassungsgerätes in der Montageöffnung und dessen abdichtende Funktion bzw. Wirkung mit dem Sicherungselement zu entnehmen ist. Dabei weist das Strömungserfassungsgerät den Griffbereich 6 und den Verschlussbereich 4 auf, der das medienführende Leitungssystem 30 abdichtet. Das Sicherungselement 14 nimmt die Rotationsachse 6 auf, die beweglich in der Montageöffnung angeordnet ist. Mit dem Bezugszeichen 34 ist das Strömungserfassungsgerät als systemschließende Elemente bzw. Baugruppe bezeichnet, die entsprechend den Pfeilen 35' und 35" innerhalb der Montageöffnung montiert bzw. demontiert wird.

## Patentansprüche

1. Strömungserfassungsgerät (1, 21) zur Bestimmung vom Strömungssignalen mit einem Trägerelement (2, 22), einer Funktionsbaugruppe (3, 15) mit wenigstens einem um eine Rotationsachse (6, 26) drehbeweglich angeordneten Erfassungselement (5) und wenigstens einem Sicherungselement (14, 27),
**dadurch gekennzeichnet, dass**
das Trägerelement (2, 22) in einer Montageöffnung eines medienführenden Leitungssystems integrierbar und mit dem Erfassungselement (5) drehbeweglich gekoppelt ist und das Sicherungselement (14, 27) die Rotationsachse (6, 26) des Erfassungselements (5) beweglich fixiert.

2. Strömungserfassungsgerät gemäß Anspruch 1,
**dadurch gekennzeichnet, dass**
das Trägerelement (2, 22) ein Verschlusselement (7) ist.

3. Strömungserfassungsgerät gemäß einem der vorstehenden Ansprüche,
**dadurch gekennzeichnet, dass**
das Verschlusselement (7) eine integrierte und/oder angespritzte Dichtung aufweist.

4. Strömungserfassungsgerät gemäß einem der vorstehenden Ansprüche,
**dadurch gekennzeichnet, dass**
die Funktionsgruppe (3, 15) ein Erfassungselement (5) wie beispielsweise einen Propeller und einen Magneten zur Signalübertragung aufweist.

5. Strömungserfassungsgerät gemäß einem der vorstehenden Ansprüche,
**dadurch gekennzeichnet, dass**
das Trägerelement (2, 22) einen Deckel bildet, welcher für die Abstützung oder Lagerung der Rotationsachse (6, 26) und/oder der Propellerbaugruppe dient.

6. Strömungserfassungsgerät gemäß einem der vorstehenden Ansprüche,
**dadurch gekennzeichnet, dass**
das Trägerelement (2, 22) oder die Funktionsgruppe (3, 25) wenigstens ein Verbindungselement aufweist, welches aus einer Gruppe ausgewählt ist, welche Bajonett-, Klammer-, Schraubverbindungen, Kombinationen hieraus und dergleichen aufweist.

7. Strömungserfassungsgerät gemäß einem der vorstehenden Ansprüche,
**dadurch gekennzeichnet, dass**
dieses die Montageöffnung in einem medienführenden Leitungssystem vollständig abdichtet.

8. Strömungserfassungsgerät gemäß einem der vorstehenden Ansprüche,
**dadurch gekennzeichnet, dass**
die Montage des Strömungserfassungsgerätes (1, 21) im Wesentlichen parallel zur Rotationsachse des Funktionselementes (3, 25) erfolgt.

9. Strömungserfassungsgerät gemäß Anspruch 1,
**dadurch gekennzeichnet, dass**
das Trägerelement (2, 22) zwei zueinander schwenkbewegliche Halbschalen (24', 24")bildet, zwischen welchen die Funktionsbaugruppe (3, 25) aufgenommen wird und die Halbschalen mittels des Sicherungselements (27) in einer geschlossenen Position fixiert werden.

10. Strömungserfassungsgerät gemäß Anspruch 9,
**dadurch gekennzeichnet, dass**
das Sicherungselement (27) wenigstens längsverschieblich im Trägerelement (2, 22) angeordnet ist.

11. Strömungserfassungsgerät gemäß einem der Ansprüche 9 oder 10,
**dadurch gekennzeichnet, dass**
das wenigstens ein weiteres Bauelement die Montageöffnung in einem medienführenden Leitungssystem vollständig abdichtet.

12. Strömungserfassungsgerät gemäß einem der Ansprüche 9 bis 11,
**dadurch gekennzeichnet, dass**
das Trägerelement (2, 22) an die zu der Montageöffnung benachbarten Strukturen des medienführenden Systems angepasst ist.

13. Strömungserfassungsgerät gemäß einem der vorstehenden Ansprüche,
**dadurch gekennzeichnet, dass**
die Funktionsgruppe (3, 25) eine Propellerbaugruppe oder dergleichen zur Bestimmung einer Strömungsgeschwindigkeit, eines Volumens, einer Viskosität oder dergleichen ist.

14. Strömungserfassungsgerät gemäß einem der vorstehenden Ansprüche,
**dadurch gekennzeichnet, dass**
das Trägerelement (2, 22) und/oder die Funktionsgruppe (3, 25) und/oder das Sicherungselement (14, 27) einstückig sind.

15. Strömungserfassungsgerät gemäß einem der vorstehenden Ansprüche,
**dadurch gekennzeichnet, dass**
das Strömungserfassungsgerät (1, 21) werkzeugfrei in die Montageöffnung des medienführenden Systems einbaubar ist.

16. Strömungserfassungsgerät gemäß einem der vorstehenden Ansprüche,
**dadurch gekennzeichnet, dass**
wenigstens einzelne Bauteile des Strömungserfassungsgerätes (1, 21), insbesondere die Funktionsgruppe (3, 25), aus wenigstens einem Werkstoff hergestellt sind, welcher aus einer Gruppe ausgewählt ist, die Kunststoffe wie beispielsweise duro- und/oder thermoplastischer Kunststoffe, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen und Metalle, insbesondere Stähle, wie nicht rostende Stähle aufweist und/oder das Verschlusselement aus Kunststoff und/oder die Achsen aus Stahl bzw. Kunststoff und/oder der aus Kunststoff hergestellte Propeller mit einem Magneten ausgeführt sind.

17. Strömungserfassungsgerät gemäß einem der vorstehenden Ansprüche,
**dadurch gekennzeichnet, dass**
das wenigstens einzelne Bauteile, vorzugsweise das gesamte Strömungserfassungsgerät (1, 21) im Spritzgussverfahren, vorzugsweise im mehrstufigen Spritzgussverfahren und insbesondere im Mehrkomponentenspritzgussverfahren hergestellt werden.

18. Verwendung eines Strömungserfassungsgeräts gemäß einem der vorstehenden Ansprüche 1 bis 17 für ein geschlossenes oder offenes Leitungssystem.

19. Verfahren zur Herstellung eines Strömungserfassungsgerätes (21) gemäß wenigstens einem der vorstehenden Ansprüche 9 bis 17 mit den Schritten
- Herstellen eines Trägerelements (22) mit wenigstens zwei schwenkbeweglich verbundenen Gehäuseabschnitten (24', 24") und der Funktionsgruppe (25) als einstückiges Bauteil;
- Zusammenschwenken der Gehäuseabschnitte;
- Einschieben des Sicherungselements (27) zur Aufnahme wenigstens eines Abschnitts der Rotationsachse.

20. Verfahren zur Herstellung eines Strömungserfassungsgerätes (21) gemäß Anspruch 19,
**dadurch gekennzeichnet, dass**
die Herstellung des Trägerelements (22) und/oder der Funktionsgruppe (25) und/oder des Sicherungselements (27) im Spritzgussverfahren erfolgt.

21. Verfahren zur Herstellung eines Strömungserfassungsgerätes (21) gemäß wenigstens einem der Ansprüche 19 oder 20,
**dadurch gekennzeichnet, dass**
die Herstellung im mehrstufigen Spritzgussverfahren, insbesondere im Mehrkomponentenspritzgussverfahren erfolgt.
